# EUROPÄISCHE PATENTSCHRIFT

(11) **EP 0 534 228 B1**
(45) Veröffentlichungstag und Bekanntmachung des Hinweises auf die Patenterteilung: **30.08.1995**
(21) Anmeldenummer: 92115391.2
(22) Anmeldetag: 09.09.1992
(51) Int. Cl.: C08J 3/20, C08J 3/12, C08J 3/24

(54) **Verfahren zum Modifizieren hydrophiler Polymerisate**
Process for modifying hydrophilic polymerisates
Procédé de modification de polymérisats hydrophiles

(30) Priorität: 18.09.1991 DE 4131045
(43) Veröffentlichungstag der Anmeldung: 31.03.1993
(73) Patentinhaber: HOECHST AKTIENGESELLSCHAFT, 65926 Frankfurt am Main (DE)
(72) Erfinder: Engelhardt, Friedrich, Dr., W-6000 Frankfurt am Main (DE); Stüven, Uwe, W-6232 Bad Soden (DE); Mayer, Manfred, Dr., W-6272 Niedernhausen (DE)

(56) Entgegenhaltungen:
- EP-A- 0 010 752
- FR-A- 2 559 158
- GB-A- 1 376 091

## Beschreibung

Die vorliegende Erfindung betrifft ein Verfahren zum Modifizieren hydrophiler Polymerisate durch Einmischen geeigneter Modifizierungsmittel.

Hydrophile Polymerisate können mit Hilfe geeigneter Zusätze modifiziert werden. Insbesondere können die Oberflächeneigenschaften hydrophiler Polymerpartikel verändert, beispielsweise hydrophobiert, hydrophiliert oder verdichtet werden. Auch Permeabilität, Quellverhalten, Benetzbarkeit, Saugfähigkeit usw. können modifiziert werden.

Aus der DE-B 22 64 027 und der DE 35 03 458 sind bereits Verfahren zum Einmischen von Modifizierungskomponenten bekannt, die jedoch keine befriedigenden Ergebnisse im Mischergebnis und damit in den gewünschten Eigenschaften liefern und einen zu großen technischen und energetischen Aufwand erfordern.

Nach einem Verfahren (DE-B 22 64 027) wird absorbierendes Pulver mit Wasser und Vernetzer in einem Zwillingstrommelmischer, einem sog. "ZIG-ZAG"-Mischer oder in einem horizontal arbeitenden Pflugscharmischer bei Zugabezeiten der Flüssigkeit von 30 Minuten innig vermischt. Dabei ergeben sich stark verklumpte, teilweise sehr feuchte Agglomerate, die in einem nachfolgenden Trockner getrocknet und danach thermisch behandelt werden. Schon hier zeigt sich, daß infolge von starkem Verklumpen keine gleichmäßige Verteilung erreicht wird. Ferner bringt die thermische Nachbehandlung innerhalb der Agglomerate, in denen Überkonzentrationen auftreten, Verluste in der Effektivität des Nachvernetzers, was sich in einer schlechten Vermischung der restlichen Teilchen und Unterkonzentration des Nachvernetzers wiederspiegelt. Da an die Kornverteilung des Pulvers strenge Anforderungen gestellt werden (z. B. 1 % < 100 »m und < 0,5 % > 800 »m), muß das behandelte Pulver zerkleinert werden. Das bei der Abseibung auftretende Überkorn wird in die Mahlstufe zurückgeführt. Das Unterkorn, das nicht weiterverwendet werden kann, wird in einem weiteren Mischer mit Wasser zu Granulaten vermischt, die Granulate getrocknet und weiter auf die geforderte Kornverteilung vermahlen und abgesiebt.

Auch das Verfahren DE 35 03 458, bei dem der Nachvernetzer in einem Kegel-Schneckenmischer zugegeben und eingemischt wird, zeigt die entscheidenden Nachteile der Agglomeratbildung und der ungleichmäßigen Verteilung des Nachvernetzers auf den Partikeln.

Beim Kegel-Schneckenmischer dreht sich im kegeligen, spitz nach unten verlaufenden Mischergehäuse eine senkrechte, parallel zur schrägen Wand, im Umlauf geführte Schnecke nach oben, so daß durch die periphere Bewegung der Schnecke und die Rotation der Schnecke um die eigene Achse eine gute Durchmischung gewährleistet ist. Trotz dieser üblicherweise guten Durchmischung treten die zuvor beschriebenen Nachteile auch bei diesem Mischverfahren ein.

Die EP-A-10752 beschreibt ein Verfahren zum kontinuierlichen, gleichmäßigen Vermischen von Polyolefinpulver mit Zusätzen, dadurch gekennzeichnet, daß man das Pulver und die Zusätze mit einer Leistung von 370 bis 1280 Wh/m³ Pulver mittels rotierender Messer mit einer Messerfolgefrequenz von 100 bis 300 pro sec. mischt und dabei das Pulver durch eine Zone mit einer Energiedissipationsdichte von 200 bis 350 W/l Mischervolumen führt.
Polyolefinpulver sind aber kompakte hydrophobe Polymere die keinerlei Aufnahmevermögen für Flüssigkeiten haben.

Die Aufgabe der vorliegenden Erfindung besteht demnach darin, ein Verfahren bereitzustellen, das ein homogenes Vermischen von Modifizierungskomponenten mit pulverförmigen hydrophilen Polymerisaten gewährleistet, bei dem die Einmischung innerhalb sehr kurzer Zeit erfolgt, so daß sich das starke Absorptionsverhalten des Polymerisats für die homogene Einmischung und gleichmäßige Beschichtung der Oberfläche der Pulverteilchen nicht nachteilig auswirken kann, d. h. die Einmischung soll bereits erfolgt sein, bevor durch das starke Absorptionsvermögen des Pulvers sich Agglomerate bilden können.

Diese Aufgabe wird gelöst durch ein Verfahren zum Modifizieren hydrophiler Polymerisate durch Einmischen eines Modifizierungsmittels, dadurch gekennzeichnet, daß man das pulverförmige Polymerisat und das Modifizierungsmittel in einen senkrechten, zylindrischen Mischer kontinuierlich zugibt, mit einer Leistung von 1000 bis 5000 Wh/m³ Pulver mittels rotierender Messer mit einer Messerfolgefrequenz von 100 bis 300 s⁻¹ bei einer Verweilzeit von 1 - 10 s mischt und dabei das Pulver durch Zonen mit Energiedissipationsdichten von 300 - 600 W/l Mischervolumen führt.

Bevorzugt wird mit einer Leistung von 1500 - 3000 Wh/m³ Pulver gemischt. Die Messerfolgefrequenz ist bevorzugt 250 - 300 s⁻¹. Bevorzugt sitzen dabei die Messerköpfe auf einer sich drehenden koaxial zum Mischrohr angebrachten Welle und reichen mit ihren Messerenden bis zur Rohrwand, von der sie nur durch einen kleinen Spalt getrennt sind. Für gewöhnlich sind 1 bis 3, besonders bevorzugt 2 Messerköpfe, die auf der Welle hintereinander angeordnet sind, ausreichend. Jeder Messerkopf kann mehrere Messer, bevorzugt 6, aufweisen, die am Kopf unterschiedlich zur Durchlaufrichtung angestellt sein können. Die bevorzugte Verweilzeit beträgt 1 bis 4 s. Das erfindungsgemäße Verfahren arbeitet somit mit einer bevorzugten Partikelgeschwindigkeit von 0,05 - 1 m/s beim Durchlauf durch den Mischer.

Das nach dem erfindungsgemäßen Verfahren zu modifizierende hydrophile Polymerisat wird dem Mischer vorzugsweise über eine Massendosiervorrichtung zugeführt. Es ist bevorzugt, die Modifizierungskomponente ebenfalls massendosiert und zwar kurz vor Eintritt in den Mischer auf das Polymerisat aufzugeben.

Die Modifizierungskomponente ist mit besonderem Vorteil flüssig. Sie kann in Substanz, als Lösung, Emulsion oder Dispersion eingesetzt werden. Gegebenenfalls ist es somit zweckmäßig, das erfindungsgemäße Verfahren bei einer Temperatur oberhalb des Schmelzpunktes der Modifizierungskomponente auszuführen.

Um Anbackungen an der Wand zuvorzukommen, kann die zylindrische Wand des Mischers aus flexiblem Material bestehen und über einen außenseitig angebrachten Rollenkäfig, der vertikal nach oben und unten bewegt wird, verformt werden. Ein geeignetes flexibles Material ist beispielsweise Gummi.

Die flüssige Modifizierungskomponente kann über ein Rohr zugeführt werden, bevorzugt aber über eine Düse (z. B. Druckdüse oder Zweistoffdüse) oder einen Injektor (z. B. Gasinjektor).

Mit dem erfindungsgemäßen Verfahren ist es möglich, auch geringe Mengen Modifizierungsmittel mit einem vergleichsweise großen Massenstrom von zu modifizierendem Polymerisat homogen zu vermischen, so daß die Oberfläche des Pulvers gleichmäßig beschichtet ist und das Pulver hinsichtlich der Kornverteilung keinerlei weiterer Behandlung bedarf.

Das gemischte und gleichmäßig beschichtete Pulver läßt sich gegebenenfalls in einem anschließenden kontinuierlich arbeitenden Trockner behandeln, in dem die Entfernung der überschüssigen Feuchte und gegebenenfalls eine Nachreaktion vorgenommen werden kann.

Geeignete Trockner sind beispielsweise Kontakttrockner oder Wirbelschichttrockner. Wirbelschichttrockner sind vorzugsweise mit Heizpanelen oder Heizrohren in der Wirbelschicht ausgestattet.
Die Verweilzeit des modifizierten Polymerisats beträgt bevorzugt 10 - 60 min, besonders bevorzugt 30 min. Trocknung und gegebenenfalls Nachreaktion können aber auch durch energiereiche Stahlung bewirkt werden.

Für das erfindungsgemäße Verfahren geeignete hydrophile Polymerisate sind bespielsweise Homo- und Copolymerisate wasserlöslicher Monomerenkomponenten wie Acrylsäure, Methacrylsäure, Crotonsäure, Acrylamidopropansulfonsäure, Vinylphosphonsäure, Maleinsäure, Vinylsulfonsäure und deren Salze, bevorzugt die Alkali-und Ammoniumsalze. Weitere geeignete Monomerkomponenten sind Acrylamide, N-Vinylamide, die Hydroxalkylester der Acryl- und Methacrylsäure sowie basische und kationische Monomerkomponenten, wie die basischen Ester und Amide der Acryl- und Methacrylsäure, z. B. die Ester des Dimethylaminoethanols, oder N-Dimethylaminopropylmethacrylamid sowie Dimethyldiallylammoniumchlorid oder Vinylimidazolin. Soweit die genannten Polymerisate ionische Gruppen tragen, können sie auch ganz oder teilweise neutralisiert sein.

Nach dem erfindungsgemäßen Verfahren lassen sich ferner pfropfpolymere, der genannten hydrophilen Monomerkomponenten, z. B. auf Stärke oder Polyalkylenoxide einsetzen. Geeignete Polyalkylenoxide sind beispielsweise Verbindungen der allgemeinen Formel I: 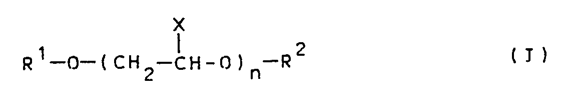
worin R¹, R² = H, Alkyl, Alkenyl, Aryl, die ggf. substituiert sind
X = H, -CH₃ und
n = eine Zahl von 1 bis 10000
bedeuten. Geeignet sind z. B. Polyethylenglykole, Polypropylenglykole sowie deren Mischpolymerisate und Derivate sowie Pfropfmatrices, wie sie in DOS 39 11 433 und EP 391 108 beschrieben sind.

Bevorzugt sind hydrophile Polymerisate aus den genannten Monomeren, welche während der Polymerisation durch den Zusatz mehrfach olefinisch ungesättigter Verbindungen vernetzt sind. Derartige Polymere sind in der Lage wäßrige Lösungen unter Aufquellen zu absorbieren und finden in der Hygieneindustrie Verwendung. Sie sind beispielsweise in EP-A 316 792, EP-A 343 427, EP-A 391 108, EP-A 400 283, EP-A 417 410 und EP-A 421 264 beschrieben. Besonders bevorzugte Polymerisate sind vernetzte Polymerisate auf Basis Acrylsäure, Methacrylsäure oder Acrylamidopropansulfonsäure.

Für das erfindungsgemäße Verfahren geeignete Modifizierungskomponenten sind flüssige Stoffe, wie z. B. die bereits oben erwähnten Polyalkylenoxide der Formel I, insbesondere Polyethylenglykole, Polypropylenglykole, Polyglykole mit einem Molekulargewicht bis ca. 600, Paraffine, Polyamine, wie z. B. Ethylendiamin, Diethylentriamin, Polyethylenimin, Polyglycidylverbindungen, wie z. B. Ethylenglykoldiglycidylether, Propylenglykoldiglycidylether, Polyethylenglykoldiglycidylether, Glyzerinpolyglycidylether, feste und flüssige mehrwertige Alkohole, wie z. B. Glyzerin, Pentaerythrit, Trimethylolpropan, Neopentylalkohol, Sorbitol, Polyvinylalkohol, sowie Lösungen oder Dispersionen vorgenannter Stoffe, sowie Polymerdispersionen, wie z. B. Poly-Acrylat-Dispersionen, Poly-Vinylacetat-Dispersionen, Alkylen-Vinylacetat-Copolymer-Dispersionen, Butadien-Styrol-Copolymer-Dispersionen, Polyurethan-Dispersionen, oder Polymerlösungen wie z. B. Lösungen von Poly(Meth)acrylaten, Polyamidoaminen, Polyvinylacetat und Copolymeren.

Besonders bevorzugt sind Diglycidylverbindungen, Polyglycidylverbindungen und Polyamine, beispielsweise Ethylenglykoldiglycidylether, Polyethylenglykoldiglycidylether, Diethylentriamin oder Polyethylenimin.

Modifizierungskomponenten werden bei dem erfindungsgemäßen Verfahren, soweit sie keine Gruppierungen im Molekül eingebaut enthalten, welche mit der Oberfläche der Polymerenpartikel chemisch reagieren, adsorptiv an der Oberfläche gebunden.

Modifizierungskomponenten, welche Gruppierungen enthalten, die in der Lage sind, mit den Polymermolekülen der Partikel chemisch zu reagieren, können kovalente, ionische oder Komplexbindungen eingehen, wie z. B., Polyglycidylverbindungen, Polyanionen, Polykationen oder mehrwertige Metallkationen.

Bei dem erfindungsgemäßen Verfahren kann das Gewichtsverhältnis zwischen dem pulverförmigen Polymerisat und dem Modifizierungsmittel beispielsweise in vielen Fällen 1 : (0,05 bis 0,00005), insbesondere 1 : (0,01 bis 0,0001) und vorzugsweise 1 : (0,005 bis 0,0005), jeweils fest auf fest, bzw. ohne Lösungs- oder Dispergiermittel gerechnet, betragen.

### Beispiel:

In einem senkrecht stehenden Mischer mit einem Rohrdurchmesser von 160 mm und 500 mm Höhe wurden kontinuierlich 600 kg/h eines pulverförmigen vernetzten, teilneutralisierten Acrylsäure-Polymerisates mit 9 kg/h einer 10 %igen wäßrigen Lösung von Ethylenglykoldiglycidylether vermischt. Das Polymerpulver wurde mit einer Dosierbandwaage massendosiert dem Mischer zugeführt. Die Vernetzerlösung wurde mit einer gravimetrisch arbeitenden Dosierwaage über einen Injektor auf das in den Mischer einlaufende Pulver zugegeben. Auf der Mischerwelle waren 2 Messerköpfe mit je 6 Messer angebracht, die mit einer Messerfolgefrequenz von 300 s⁻¹ rotierten. Die zum Mischen aufgebrachte Leistung betrug 5,6 kW. Die Verweilzeit des Pulvers im Mischer betrug 1,9 s. Der am Mischer ablaufende mit Vernetzer vermischte Pulverstrom war einwandfrei rieselfähig und wies keinerlei Klumpen auf.

Die Kornverteilung des den Mischer verlassenden Materials entsprach dem eingesetzten Pulver. Das vermischte Produkt wurde einem Kontakttrockner zugeführt, der mit 145-gradigen Sattdampf beheizt wurde. Das mit 31°C in den Trockner eintretende Produkt wurde unter Normaldruck auf eine Temperatur von 82°C aufgeheizt. Die mit dem Vernetzer eingetragene Feuchtigkeit von 8,1 kg/h wurde dabei zu 7,6 kg/h entfernt. Die Verweilzeit im Trockner betrug 30 min.

## Patentansprüche

1. Verfahren zum Modifizieren hydrophiler Polymerisate durch Einmischen eines flüssigen Modifizierungsmittels, dadurch gekennzeichnet, daß man das pulverförmige Polymerisat und das Modifizierungsmittel in einen senkrechten, zylindrischen Mischer kontinuierlich zugibt, mit einer Leistung von 1500 bis 5000 Wh/m³ Pulver mittels rotierender Messer mit einer Messerfolgefrequenz von 100 bis 300 s⁻¹ bei einer Verweilzeit von 1 - 10 s mischt und dabei das Pulver durch Zonen mit Energiedissipationsdichten von 300 - 600 W/l Mischervolumen führt.

2. Verfahren gemäß Anspruch 1, dadurch gekennzeichnet, daß es bei einer Temperatur oberhalb des Schmelzpunktes der Modifizierungskomponente ausgeführt wird.

3. Verfahren gemäß Anspruch 1 und/oder 2, dadurch gekennzeichnet, daß eine flüssige Modifizierungskomponente über eine Düse oder einen Injektor zugeführt wird.

4. Verfahren nach einem oder mehreren der Ansprüche 1 bis 3, dadurch gekennzeichnet, daß die zylindrische Wand des Mischers aus flexiblem Material, wie. z. B. Gummi besteht und über einen außenseitig angebrachten Rollenkäfig, der vertikal nach oben und unten bewegt wird, verformt wird.

5. Verfahren nach einem oder mehreren der Ansprüche 1 bis 4, dadurch gekennzeichnet, daß im Anschluß an den Mischprozeß das erhaltene Produkt in einem Trockner behandelt wird.

6. Verfahren gemäß Anspruch 5, dadurch gekennzeichnet, daß die Verweilzeit im Trockner 10 - 60 min, besonders bevorzugt 30 min beträgt.

7. Verfahren nach einem oder mehreren der Ansprüche 1 bis 6, dadurch gekennzeichnet, daß als hydrophile Polymerisate vernetzte Polymerisate auf Basis Acrylsäure, Methacrylsäure oder Acrylamidopropansulfonsäure eingesetzt werden.

8. Verfahren nach einem oder mehreren der Ansprüche 1 bis 7, dadurch gekennzeichnet, daß als Modifizierungsmittel Diglycidylverbindungen, Polyglycidylverbindungen oder Polyamine eingesetzt werden.

9. Verfahren nach einem oder mehreren der Ansprüche 1 bis 8, dadurch gekennzeichnet, daß das Modifizierungsmittel im Gewichtsverhältnis pulverförmiges Polymerisat : Modifizierungsmitel 1 : (0,05 bis 0,00005), insbesondere 1 : (0,01 bis 0,0001) und vorzugsweise 1 : (0,005 bis 0,0005) eingesetzt wird.

## Claims

1. Process for modifying hydrophilic polymers by mixing with a liquid modifier, characterised in that the pulverulent polymer and the modifier are introduced continuously into a vertical, cylindrical mixer, mixed at a power of from 1,500 to 5,000 Wh/m³ of powder by means of rotating blades at a blade rate of from 100 to 300 s⁻¹ at a residence time of 1 - 10 seconds, during which the powder is passed through zones having energy dissipation densities of 300 - 600 W/l of mixer volume.

2. Process according to Claim 1, characterised in that it is carried out at a temperature above the melting point of the modifying component.

3. Process according to Claim 1 and/or 2, characterised in that a liquid modifying component is fed in via a nozzle or an injector.

4. Process according to one or more of Claims 1 to 3, characterised in that the cylindrical wall of the mixer comprises flexible material, such as, for example, rubber, and is deformed by means of an externally applied roller cage, which is moved vertically up and down.

5. Process according to one or more of Claims 1 to 4, characterised in that, after the mixing process, the resultant product is treated in a drier.

6. Process according to Claim 5, characterised in that the residence time in the drier is 10 - 60 minutes, particularly preferably 30 minutes.

7. Process according to one or more of Claims 1 to 6, characterised in that the hydrophilic polymers employed are crosslinked polymers based on acrylic acid, methacrylic acid or acrylamidopropanesulphonic acid.

8. Process according to one or more of Claims 1 to 7, characterised in that the modifiers employed are diglycidyl compounds, polyglycidyl compounds or polyamines.

9. Process according to one or more of Claims 1 to 8, characterised in that the modifier is employed in a pulverulent polymer : modifier weight ratio of 1 : (0.05 to 0.00005), in particular 1 : (0.01 to 0.0001) and preferably 1 : (0.005 to 0.0005)

## Revendications

1. Procédé de modification de polymères hydrophiles par incorporation d'un agent modifiant liquide, caractérisé en ce que l'on introduit en continu le polymère pulvérulent et l'agent modifiant dans un mélangeur cylindrique vertical, on les mélange avec une puissance de 1500 à 5000 Wh/m³ de poudre à l'aide de lames rotatives à une fréquence de répétition des lames de 100 à 300 s⁻¹ pendant un temps de séjour de 1 à 10 s, et on fait passer en même temps la poudre à travers des zones ayant des densités de dissipation d'énergie de 300 à 600 W/l de volume du mélangeur.

2. Procédé selon la revendication 1, caractérisé en ce qu'il est effectué à une température supérieure au point de fusion du constituant modifiant.

3. Procédé selon la revendication 1 et/ou 2, caractérisé en ce que l'on introduit un constituant modifiant liquide par l'intermédiaire d'une buse ou d'un injecteur.

4. Procédé selon l'une ou plusieurs des revendications 1 à 3, caractérisé en ce que la paroi cylindrique du mélangeur est constituée d'une matière flexible comme, par exemple, du caoutchouc, et en ce qu'elle est déformée par une cage à rouleaux disposée à l'extérieur et qui se déplace verticalement de bas en haut et de haut en bas.

5. Procédé selon l'une ou plusieurs des revendications 1 à 4, caractérisé en ce que, après le processus de mélange, on traite le produit obtenu dans un sécheur.

6. Procédé selon la revendication 5, caractérisé en ce que le temps de séjour dans le sécheur est de 10 à 60 minutes, de façon particulièrement préférée de 30 minutes.

7. Procédé selon l'une ou plusieurs des revendications 1 à 6, caractérisé en ce que l'on utilise comme polymères hydrophiles des polymères réticulés à base d'acide acrylique, d'acide méthacrylique ou d'acide acrylamidopropanesulfonique.

8. Procédé selon l'une ou plusieurs des revendications 1 à 7, caractérisé en ce que l'on utilise comme agent modifiant des composés de diglycidyle, des composés de polyglycidyle ou des polyamines.

9. Procédé selon l'une ou plusieurs des revendications 1 à 8, caractérisé en ce que l'agent modifiant est utilisé dans un rapport en masse du polymère pulvérulent à l'agent modifiant de 1 : (0,05 à 0,00005), en particulier de 1 : (0,01 à 0,0001), et de préférence de 1 : (0,005 à 0,0005).
